# EUROPEAN PATENT SPECIFICATION

(11) **EP 4 303 502 B1**
(45) Date of publication and mention of the grant of the patent: **05.08.2026**
(21) Application number: 22751405.6
(22) Date of filing: 13.05.2022
(51) Int. Cl.: F24F 13/20, B65D 5/42, F24F 3/14, B01D 53/04, B01D 53/26, B65D 5/38

(54) **DEHUMIDIFIER MADE OF CARDBOARD**
ENTFEUCHTER AUS KARTON
DÉSHUMIDIFICATEUR EN CARTON

(43) Date of publication of application: 10.01.2024
(73) Proprietor: Humex, S.A., 43110 La Canonja (Tarragona) (ES)
(72) Inventor: SCHMIDT DIOS, Eva María, 43110 Tarragona (ES)
(74) Representative: Isern Patentes y Marcas S.L.
(86) International application number: PCT/ES2022/070294
(87) International publication number: WO 2023/105102

(56) References cited:
- WO-A1-2016/138305
- FR-A- 1 174 933
- GB-A- 925 971
- JP-A- 2008 088 575
- US-A- 4 624 366
- US-A1- 2013 139 692
- US-B1- 6 767 521

## Description

### OBJECT OF THE INVENTION

The object of the present invention relates to a dehumidifier made of cardboard, resulting in a lower manufacturing cost and the possibility of enabling the recycling thereof.

The present invention is characterised by being manufactured in appropriately treated cardboard, therefore having an internal treatment rendering the water-repellent material, i.e., resistant to ambient humidity and direct contact with brine or the collected liquid.

Therefore, the present invention is comprised within the field of dehumidifiers on one hand, and containers made of cardboard on the other.

### BACKGROUND OF THE INVENTION

Dehumidifiers, which are devices having a perforated casing preferably made of plastic and inside which there is housed a humidity absorbent bag, are well-known in the state of the art. Plastic casings are expensive.

There are also known in the state of the art odour absorbers, some of which are made of cardboard since odour absorption does not entail any structural problem for the cardboard. Some examples are described in the following documents:
US4995556 discloses a deodorizer housed in a cardboard container.
US4624366 discloses a cardboard container housing therein a device capable of absorbing bad odours.
US5492675 discloses a device capable of absorbing bad odours in which the device can be placed on a cardboard base.
US2013139692 discloses a device capable of absorbing bad odours which can be housed in a cardboard container. WO 2016/138305A1 discloses a child-resistant package comprising an inner tray, an outer sleeve, and a locking system.

However, in the state of the art there is no known humidity absorber or dehumidifier made of cardboard since there are usually dispersed humidities inside the container and therefore no cardboard dehumidifiers have been developed.

Therefore, on object of the present invention relates to developing a dehumidifier made of cardboard such as the one described below and the essence of which is described in claim 1.

### DISCLOSURE OF THE INVENTION

The essence of the object of the present invention is described in the independent claim, and the different embodiments are described in the dependent claims.

The object of the present invention relates to a dehumidifier made of cardboard comprising a removable rectangular prismatic tray or cuvette or punnet which can be removed from an outer case in which the inner tray is housed, wherein the inner tray is made of a water-repellent material and it is where the bag with the ambient humidity absorbent material is housed.

The outer case where the inner tray is housed has a parallelepipedic configuration, having on one of its faces a series of perforations which allow the entry of humidity into the outer case where is housed the absorbent bag.

The outer case has a separable flap arranged on the face provided with the perforations of the outer case, such that it serves as means for optimising the case as packaging for presenting the product at the point of sale. It is the image of the product in the store because, otherwise, an additional element would have to be used and printed to communicate the brand and advantages of the product. Once the function of communicating and attracting has been performed, it is removed and an elegant, decorative and discrete product is left. Therefore, as a result of the separable flap, material waste is prevented and the product is optimised.

The absorbent bag is packaged in a film which is made up of 2 plastic films: a first face of single-layer plastic film and another second face of Dupont Tyvek ^{®} (high-density, water-repellent, highly transpirable, 100% recyclable polyethylene); through the second face the humidity enters the bag and the absorbent granulate (calcium chloride) is transformed into liquid, and a cellulosic material transforms it into a gelatinous mass.

Once the bag has been transformed into a gelatinous mass, it must be replaced with a new one.

Unless indicated otherwise, all the technical and scientific elements used in the present specification have the meaning normally understood by a person having ordinary skill in the art to which this invention belongs. In the practice of the present invention, methods and materials similar or equivalent to those described in the specification can be used.

Throughout the description and claims, the word "comprises" and variants thereof do not seek to exclude other technical features, additives, components or steps. For those skilled in the art, other objects, advantages and features of the invention will be inferred in part from the description and in part from the practice of the invention.

### BRIEF DESCRIPTION OF THE FIGURES

To complement the description that is being made and for the purpose of helping to better understand the features of the invention, according to a preferred practical embodiment thereof, a set of drawings is attached as an integral part of said description in which the following has been depicted in an illustrative and non-limiting manner.
FIG. 1 shows a first embodiment of a dehumidifier like the one that is the object of the invention.
FIG. 2 shows a second embodiment of a dehumidifier.
FIG. 3 shows how to be able to access the inside of the dehumidifier.
FIG. 4 shows the dehumidifier ready to be used.
FIG. 5 shows the die-cut cardboard sheet from which the inner tray is formed.
FIG. 6 and FIG. 7 show the die-cut cardboard sheets from which the outer cases are formed.

### PREFERRED EMBODIMENT OF THE INVENTION

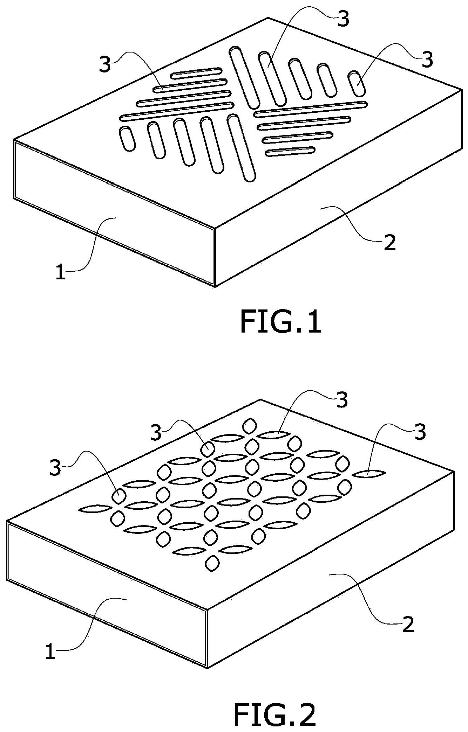

It can be observed in Figures 1 and 2 that the dehumidifier object of the invention adopts a parallelepipedic general configuration comprising a removable tray (1) or punnet or cuvette inside which there can be housed a bag with material that absorbs humidity, an outer case (2) open at both ends through which the tray (1) can be removed from and inserted into the space defined by the outer case (2), wherein all the materials are made of cardboard and only the tray (1) is treated to render it water-repellent, i.e., resistant to ambient humidity and direct contact with water.

The options for the tray (1) are included among the following:
Option 1: PLASTICISED GEL BASE made with 400 g Kraft material where only a face is plasticised with matte polypropylene on one face.
Option 2: PLASTICISED BAG, GEL BASE, made with 400 g Kraft material where both faces are plasticised with matte polypropylene.
Option 3: SAPINO BAG, GEL BASE made with 650 g packline Sapino material (rigid cardboard).

Kraft paper has a coarse, rough appearance in brown tones, although it can also be produced in other colours. It is much more resistant than conventional paper, hence its name (kraft comes from German and means "resistance").

This paper is obtained from wood fibre pulp. Its manufacturing process renders it a 100% renewable, recyclable and biodegradable paper, as it breaks down easily. Another one of its main features is that it takes up very little space and is more cost-effective than conventional paper. It allows space to be saved during its storage because it does not swell up, as occurs with plastic or bubble wrap, also used as packaging.

Kraft paper is stronger and more resistant than conventional white paper. That is, due to its low quantity of lignin and due to the fact that the bleaching process, which causes the resistance thereof to decrease, is not applied to it, and manufacturing costs are furthermore increased.

The material used in manufacturing the tray in a possible embodiment is formed by at least one recycled inner face and layers of unbleached raw Kraft paper plus polyethylene (PE), all with a basis weight of 700 g, where the composition and percentages of the cardboard are:
- Recycled fibre: 556 g = 79.43%
- Kraft fibre: 120 g = 17.14%
- PE: 24 g = 3.43%

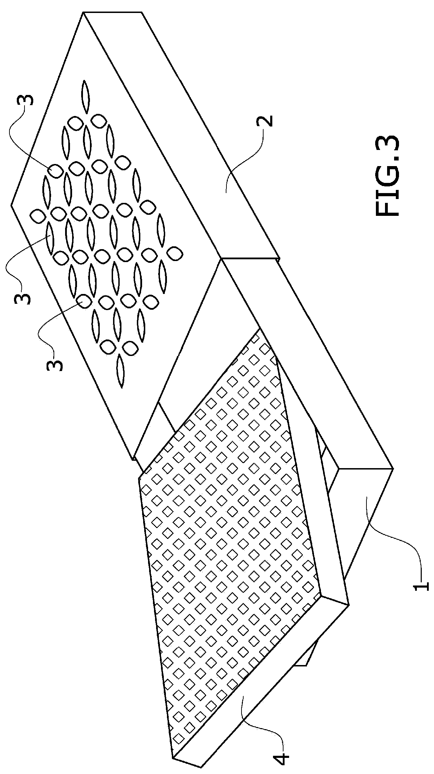

In Figure 3 it can be observed how the tray (1) has been removed from the outer case (2), where it can be seen how an absorbent bag (4) is housed inside the tray (1).

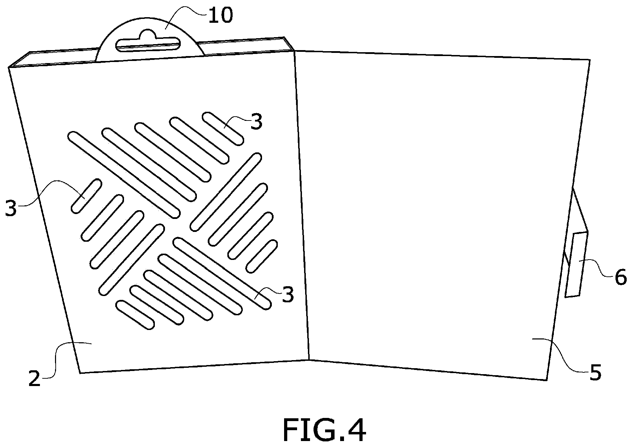

Figure 4 shows a separable flap (5) which can be separated from the rest of the outer case (2), wherein said separable flap (5) has a closing tab (6) such that when the separable flap (5) is covering the perforations (3) or slots, they serve as a means of identifying and recognising the product.

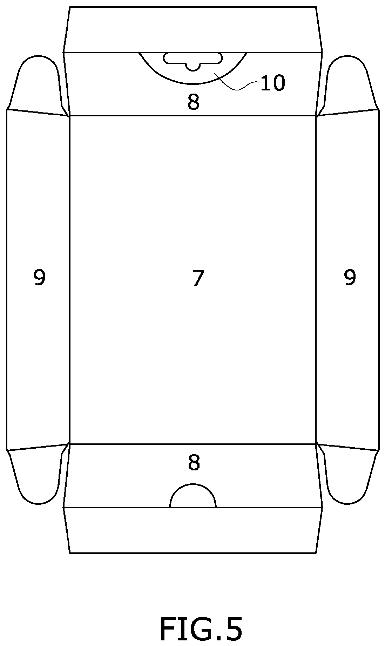

Figure 5 shows the die-cut cardboard sheet appropriately treated to be water-repellent used in forming the tray (1) which, as can be observed, comprises a base (7), two end members (8) and two longitudinal members (9), wherein a folding hanger (10) is arranged on preferably one of the end members (8).

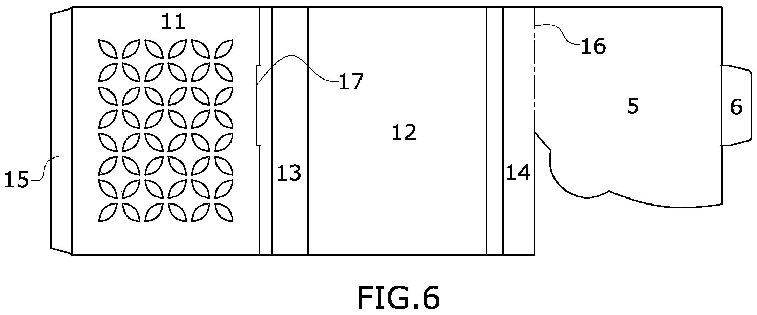

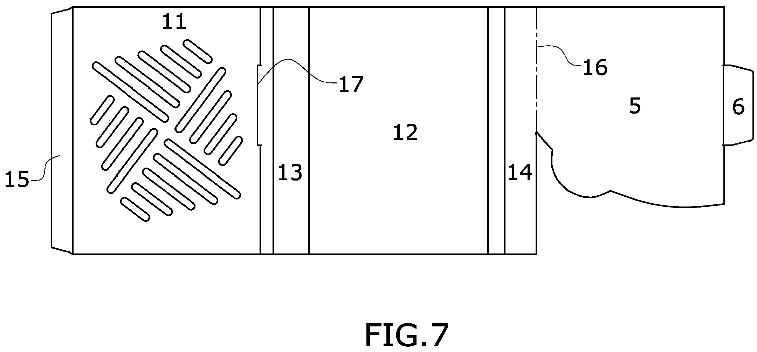

Figures 6 and 7 show the die-cut cardboard sheets for forming the respective outer cases (2), where it can be seen that it comprises a front face (11) provided with a series of perforations (3), another rear face (12) separated by lateral sides (13) and (14), there being on the free edge of the front face (11) a closing flap (15), closing over the lateral side (14) from which there further emerges a separable flap (5) which is provided with a closing tab (6), wherein the separable flap (5) is attached to the rest of the sheet of the outer case (2) by means of a perforated line (16) which facilitates the separation thereof, and the closing tab (6) can be fitted in a slot (17) defined in the fold line defined between the front face (11) and the lateral side (13).
Having sufficiently described the nature of the present invention, as well as the manner of putting it into practice, it is hereby stated that, within its essential nature, it may be put into practice in other embodiments which differ in detail from the one indicated by way of example, and to which the protection claimed will also apply, provided that it does not alter, change or modify the scope of the invention which is defined by the appended independent claim.

## Claims

1. A dehumidifier made of cardboard, **characterised in that** it comprises a removable tray (1) or punnet or cuvette inside which is housed a bag with a humidity absorbent material, an outer case (2) open at both ends through which the tray (1) can be removed from and inserted into the space defined by the outer case (2) provided on its front face with a series of perforations (3) or slots, wherein the removable tray (1) and the outer case (2) are both made of cardboard and only the tray (1) is treated to render it water-repellent, and wherein the material used in manufacturing the tray is formed by at least one recycled inner face and layers of unbleached raw Kraft paper plus polyethylene (PE).

2. The dehumidifier made of cardboard according to claim 1, **characterised in that** the tray has a basis weight of 700 g, wherein the composition and percentages of the cardboard are:
• Recycled fibre: 556 g = 79.43%
• Kraft fibre: 120 g = 17.14%
• PE: 24 g = 3.43%

3. The dehumidifier made of cardboard according to claim 1 or 2, **characterised in that** it furthermore comprises a separable flap (5) which can be separated from the rest of the case which covers the perforations (3) like a seal.

4. The dehumidifier made of cardboard according to claim 3, **characterised in that** the tray (1) comprises a base (7), two end members (8) and two longitudinal members (9), wherein a folding hanger (10) is arranged on preferably one of the end members (8), whereas the sheet for forming the outer case (2) comprises a front face (11) provided with a series of perforations (3), another rear face (12) separated by lateral sides (13) and (14), there being on the free edge of the front face (11) a closing flap (15), closing over the lateral side (14) from which there further emerges the separable flap (5) which is provided with a closing tab (6).

5. The dehumidifier made of cardboard according to claim 3 or 4, **characterised in that** the separable flap (5) which can be separated from the rest of the sheet of the outer case (2) is attached by means of a perforated line (16).

6. The dehumidifier made of cardboard according to claim 4, **characterised in that** the closing tab (6) can be fitted in a slot (17) defined in the fold line defined between the front face (11) and the lateral side (13).

## Patentansprüche

1. Luftentfeuchter aus Karton, **dadurch gekennzeichnet, dass** er eine herausnehmbare Schale (1) oder einen Behälter oder eine Küvette umfasst, in der ein Beutel mit einem feuchtigkeitsabsorbierenden Material untergebracht ist, ein an beiden Enden offenes Außengehäuse (2), durch das die Schale (1) aus dem durch das Außengehäuse (2) definierten Raum entnommen und in diesen eingesetzt werden kann, das an seiner Vorderseite mit einer Reihe von Perforationen (3) oder Schlitzen versehen ist, wobei die herausnehmbare Schale (1) und das Außengehäuse (2) beide aus Karton bestehen und nur die Schale (1) behandelt ist, um sie wasserabweisend zu machen, und wobei das bei der Herstellung der Schale verwendete Material aus mindestens einer recycelten Innenseite und Schichten aus ungebleichtem Rohkraftpapier und Polyethylen (PE) besteht.

2. Luftentfeuchter aus Karton nach Anspruch 1, **dadurch gekennzeichnet, dass** die Schale ein Flächengewicht von 700 g aufweist, wobei die Zusammensetzung und die prozentualen Anteile des Kartons wie folgt lauten:
• Recyclingfaser: 556 g = 79,43 %
• Kraftfaser: 120 g = 17,14 %
• PE: 24 g = 3,43 %

3. Luftentfeuchter aus Karton nach Anspruch 1 oder 2, **dadurch gekennzeichnet, dass** er ferner eine abnehmbare Klappe (5) umfasst, die vom übrigen Gehäuse abgetrennt werden kann und die Perforationen (3) wie eine Dichtung abdeckt.

4. Luftentfeuchter aus Karton nach Anspruch 3, **dadurch gekennzeichnet, dass** die Schale (1) einen Boden (7), zwei Endstücke (8) und zwei Längsstücke (9) umfasst, wobei ein klappbarer Aufhänger (10) vorzugsweise an einem der Endstücke (8) angeordnet ist, während das Blatt zur Bildung des Außengehäuses (2) eine Vorderseite (11) mit einer Reihe von Perforationen (3), eine weitere Rückseite (12) umfasst, die durch Seitenwände (13) und (14) getrennt ist, wobei sich am freien Rand der Vorderseite (11) eine Verschlussklappe (15) befindet, die über die Seitenwand (14) schließt, aus der ferner die abnehmbare Klappe (5) hervorsteht, die mit einer Verschlusslasche (6) versehen ist.

5. Luftentfeuchter aus Karton nach Anspruch 3 oder 4, **dadurch gekennzeichnet, dass** die abnehmbare Klappe (5), die vom übrigen Blatt des Außengehäuses (2) abgetrennt werden kann, mittels einer perforierten Linie (16) befestigt ist.

6. Luftentfeuchter aus Karton nach Anspruch 4, **dadurch gekennzeichnet, dass** die Verschlusslasche (6) in einen Schlitz (17) eingesetzt werden kann, der in der Faltlinie zwischen der Vorderseite (11) und der Seite (13) ausgebildet ist.

## Revendications

1. Déshumidificateur fabriqué en carton, **caractérisé en ce qu'**il comprend un plateau amovible (1) ou une barquette ou une cuvette à l'intérieur de laquelle est logé un sachet avec un matériau absorbant l'humidité, un boîtier extérieur (2) ouvert aux deux extrémités à travers lequel le plateau (1) peut être retiré de l'espace défini par le boîtier extérieur (2) et y être inséré, muni sur sa face avant d'une série de perforations (3) ou de fentes, dans lequel le plateau amovible (1) et le boîtier extérieur (2) sont tous deux fabriqués en carton et seul le plateau (1) est traité pour le rendre hydrofuge, et dans lequel le matériau utilisé pour la fabrication du plateau est formé d'au moins une face intérieure recyclée et de couches de papier kraft brut non blanchi plus du polyéthylène (PE).

2. Déshumidificateur fabriqué en carton selon la revendication 1, **caractérisé en ce que** le plateau présente un grammage de 700 g, dans lequel la composition et les pourcentages du carton sont :
• Fibre recyclée : 556 g = 79,43 %
• Fibre kraft : 120 g = 17,14 %
• PE : 24 g = 3,43 %

3. Déshumidificateur fabriqué en carton selon la revendication 1 ou 2, **caractérisé en ce qu'**il comprend en outre un rabat séparable (5) qui peut être séparé du reste du boîtier et qui recouvre les perforations (3) à la manière d'un scellé.

4. Déshumidificateur fabriqué en carton selon la revendication 3, **caractérisé en ce que** le plateau (1) comprend une base (7), deux éléments d'extrémité (8) et deux éléments longitudinaux (9), dans lequel un organe de suspension pliable (10) est agencé de préférence sur l'un des éléments d'extrémité (8), tandis que la feuille destinée à former le boîtier extérieur (2) comprend une face avant (11) munie d'une série de perforations (3), une autre face arrière (12) séparée par des côtés latéraux (13) et (14), sur le bord libre de la face avant (11) étant disposé un rabat de fermeture (15), se fermant sur le côté latéral (14) duquel émerge en outre le rabat séparable (5) qui est muni d'une languette de fermeture (6).

5. Déshumidificateur fabriqué en carton selon la revendication 3 ou 4, **caractérisé en ce que** le rabat séparable (5) qui peut être séparé du reste de la feuille du boîtier extérieur (2) est fixé au moyen d'une ligne perforée (16).

6. Déshumidificateur fabriqué en carton selon la revendication 4, **caractérisé en ce que** la languette de fermeture (6) peut être introduite dans une fente (17) définie dans la ligne de pliage définie entre la face avant (11) et le côté latéral (13).
